# EUROPEAN PATENT SPECIFICATION

(11) **EP 4 032 026 B1**
(45) Date of publication and mention of the grant of the patent: **20.11.2024**
(21) Application number: 20792503.3
(22) Date of filing: 19.09.2020
(51) Int. Cl.: G06V 10/771, G06V 10/774, G06V 10/776, G06V 10/762, G06V 10/82, G06N 3/084, G06F 18/2115, G06F 18/2321

(54) **ROBUST TRAINING IN THE PRESENCE OF LABEL NOISE**
ROBUSTENAUSBILDUNG IN PRÄSENZ VON ETIKETTENGERÄUSCHEN
FORMATION ROBUSTE EN PRÉSENCE DE BRUIT D'ÉTIQUETTE

(30) Priority: 20.09.2019 US 201962903413 P
(43) Date of publication of application: 27.07.2022
(73) Proprietor: Google LLC, Mountain View, CA 94043 (US)
(72) Inventor: ZHANG, Zizhao, Mountain View, CA 94043 (US); ARIK, Sercan, Omer, Mountain View, CA 94043 (US); PFISTER, Tomas, Jon, Mountain View, CA 94043 (US); ZHANG, Han, Mountain View, CA 94043 (US)
(74) Representative: Betten & Resch
(86) International application number: PCT/US2020/051698
(87) International publication number: WO 2021/055904

(56) References cited:
- JIQUAN NGIAM ET AL: "Domain Adaptive Transfer Learning with Specialist Models", ARXIV.ORG, CORNELL UNIVERSITY LIBRARY, 201 OLIN LIBRARY CORNELL UNIVERSITY ITHACA, NY 14853, 16 November 2018 (2018-11-16), XP080936001
- JIANGCHAO YAO ET AL: "Deep Learning from Noisy Image Labels with Quality Embedding", ARXIV.ORG, CORNELL UNIVERSITY LIBRARY, 201 OLIN LIBRARY CORNELL UNIVERSITY ITHACA, NY 14853, 2 November 2017 (2017-11-02), XP080833724

## Description

### TECHNICAL FIELD

This disclosure relates to robust training of models in the presence of label noise.

### BACKGROUND

Training deep neural nets usually requires large-scale labeled data. However, acquiring clean labels for large-scale datasets is very challenging and expensive to achieve in practice, especially in data domains where the labelling cost is high, such as healthcare. Deep neural nets also have high capacity of memorization. Although many training techniques attempt to regularize neural nets and prevent noisy label invasion, when noisy labels become prominent, a neural net inevitably fits into noisy labeled data.

Typically, a small trusted training dataset is usually feasible to acquire. A practically realistic setting is to increase the size of the training data in a cheap and untrusted way (e.g., crowd-sourcing, web search, cheap labeling practices, etc.), based on the given small trusted set. If this setting can demonstrate clear benefits, it could significantly change machine learning practices. However, to increase the size of the training data, many methods still need a substantial amount of trusted data to make the neural nets generalize well. A naive usage of small trusted dataset can thus cause rapid overfilling and eventually leads to negative effects

*[*0004] "Deep Learning from Noisy Image Labels with Quality Embedding", arxiv.org, XP080833724 discloses a quality embedding model, which explicitly introduces a quality variable to represent the trustworthiness of noisy labels. The key idea is to identify the mismatch between the latent and noisy labels by embedding the quality variables into different subspaces, which effectively minimizes the noise effect. At the same time, the high-quality labels is still able to be applied for training. An additive layer aggregates the prior predictions and noisy labels as the posterior to train the classifier.

### SUMMARY

One aspect of the disclosure provides a method for robust training of a model in the presence of label noise. The invention is defined in the appended claims.

The details of one or more implementations of the disclosure are set forth in the accompanying drawings and the description below Other aspects, features, and advantages will be apparent from the description and drawings, and from the claims.

### DESCRIPTION OF DRAWINGS

FIG. 1 is a schematic view of an example system for training a model using noisy training samples
FIG. 2 is a schematic view of example components of a pseudo label generator of the system of FIG. 1.
FIG. 3 is a schematic view of additional example components of the system of FIG
FIG. 4 is a schematic view of an algorithm for training a target model.
FIG. 5 is a flowchart of an example arrangement of operations for a method of robust training in the presence of label noise.
FIG. 6 is a schematic view of an example computing device that may be used to implement the systems and methods described herein.

Like reference symbols in the various drawings indicate like elements.

### DETAILED DESCRIPTION

Training modern deep neural networks to be highly accurate generally requires vast quantities of labeled training data. However, the process of obtaining high quality labeled training data (e.g., via human annotation) is often both challenging and expensive. Because training data with noisy (i.e, inaccurate labels) is often much cheaper to acquire, methods for training neural networks from datasets with noisy labels (e.g., loosely-controlled procedures, crowd-sourcing, web search, text extraction, etc) is an active area of research. However, because many deep neural networks have high capacity for memorization, noisy labels may become prominent and cause overfitting

Conventional techniques primarily consider a setting where the entire training dataset is acquired using the same labeling technique. However, it is often advantageous to supplement the primary training set with a smaller dataset that contains highly trusted and clean labels. The smaller dataset may help the model demonstrate high robustness even when the primary training set is extremely noisy.

Implementations herein are directed toward a model trainer provides robust neural network training with noisy labels The model trainer implements three primary strategies: isolation, escalation, and guidance (IEG). The model trainer first isolates noisy and cleanly labeled training data by reweighing training samples to prevent mislabeled data from misleading the neural network training. The model trainer next escalates supervision from mislabeled data via pseudo labels to take advantage of information within the mislabeled data. Finally, the model trainer guides the training using a small trusted training dataset with strong regularization to prevent overfitting.

Thus, the model trainer implements meta learning based re-weighting and re-labelling objectives to simultaneously learn to weight the per-datum importance and progressively escalate supervised losses of training data using pseudo labels as replacements to given labels. The model trainer uses a label estimation objective to serve as an initialization of the meta re-labeling and to escalate supervision from mislabeled data. An unsupervised regularization objective enhances label estimation and improves overall representation learning.

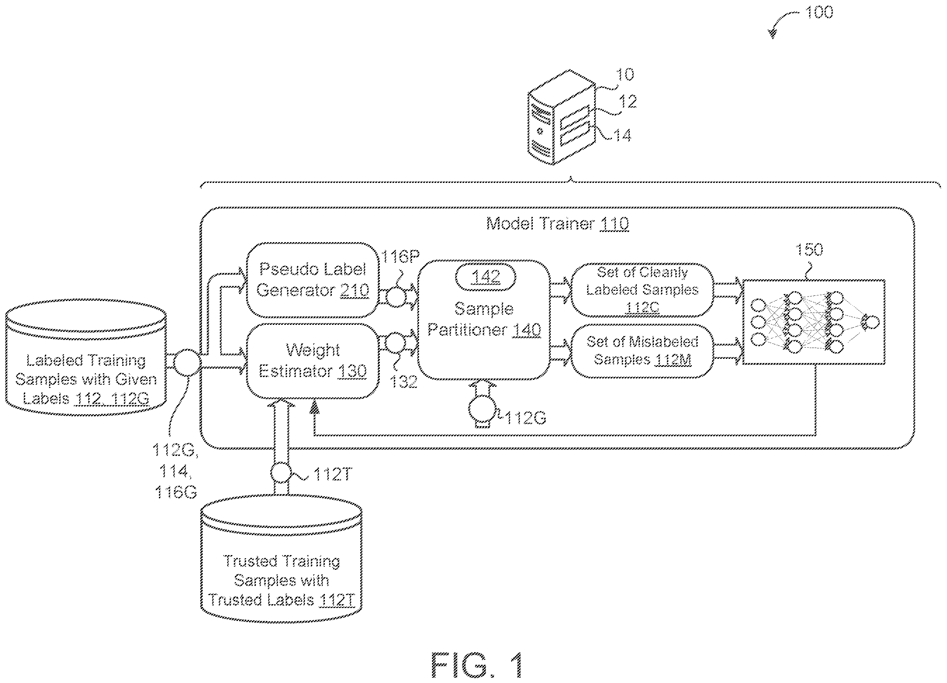

Referring to FIG. 1, in some implementations, an example system 100 includes a processing system 10. The processing system 10 may be a single computer, multiple computers, or a distributed system (e.g., a cloud environment) having fixed or scalable / elastic computing resources 12 (e.g., data processing hardware) and/or storage resources 14 (e.g., memory hardware). The processing system 10 executes a model trainer 110. The model trainer 110 trains a target model 150 (e.g., a deep neural network (DNN)) to make predictions based on input data For example, the model trainer 110 trains a convolutional neural network (CNN). The model trainer 110 trains the target model 150 on a set of labeled training samples 112, 112G. A labeled training sample includes both training data and a label for the training data. The label includes annotations or other indications of the correct result for the target model 150. In contrast, unlabeled training samples only include the training data without the corresponding label.

For example, labeled data for a model that is trained to transcribe audio data includes the audio data as well as a corresponding transcription of the audio data. Unlabeled data for the same target model 150 would include the audio data without the transcription. With labeled data, the target model 150 may make a prediction based on a training sample and then compare the prediction to the label serving as a ground-truth to determine how accurate the prediction was Thus, each labeled training sample 112G includes both training data 114G and an associated given label 116G.

The labeled training samples 112G may be representative of whatever data the target model 150 requires to make its predictions. For example, the training data 114G may include frames of image data (e.g., for object detection, classification, etc.), frames of audio data (e.g., for transcription, speech recognition, etc.), and/or text (e.g., for natural language classification, etc.). Each training sample 112G of the set of training samples 112G, in some implementations, are images and the given labels 116G are text descriptors of the images. The labeled training samples 112G may be stored on the processing system 10 (e.g., within memory hardware 14) or received, via a network or other communication channel, from another entity The model trainer 110 may select labeled training samples 112G from the set of training samples 112G in batches (i e., a different batch for each iteration of the training).

The model trainer 110 includes a pseudo label generator 210. During each training iteration of a plurality of training iterations, and for each training sample 112G in the set of labeled training samples 112G, the pseudo label generator 210 generates a pseudo label 116P for the corresponding labeled training sample 112G. The pseudo label 116P represents a relabeling of the training sample 1 12G with a pseudo label 116P generated by the pseudo label generator 210.

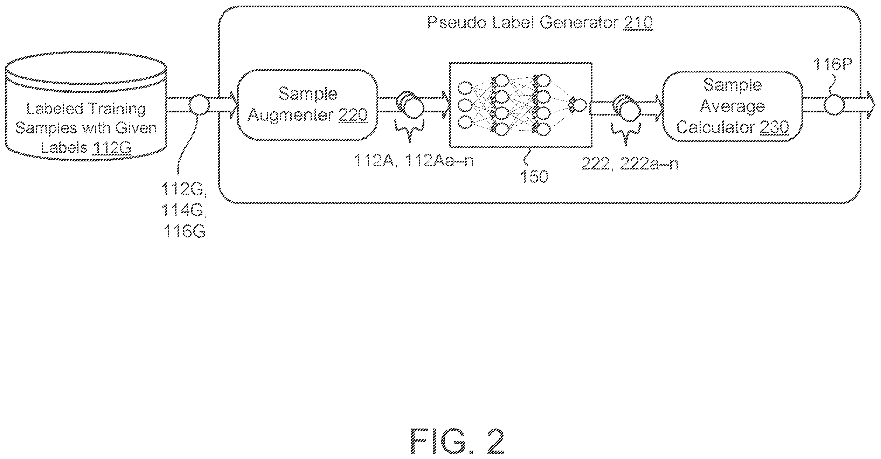

Referring now to FIG. 2, in some implementations, the pseudo label generator 210 includes a sample augmenter 220 and a sample average calculator 230. The sample augmenter 220, when the pseudo label generator 210 generates the pseudo label 116P for the training sample 112G, generates a plurality of augmented training samples 112A, 112Aa-n based on the labeled training sample 112G. The sample augmenter 220 generates the augmented training samples 112A by introducing different changes to the input training sample 112G for each augmented training sample 112A. For example, the sample augmenter 220 increases or decreases values by a predetermined or random amount to generate an augmented training sample 112A from the labeled training sample 112G. As another example, when the labeled training sample 112G includes a frame of image data, the sample augmenter 220 may rotate the image, flip the image, crop the image, etc. The sample augmenter 220 may use any other conventional means of augmenting or perturbing the data as well

In order to add labels to the augmented training samples 112A, the pseudo label generator 210, in some examples, uses the target model 150 (i.e., a machine learning model) to generate a predicted label 222, 220a-n for each of the augmented training samples 112A. The sample average calculator 230 may average each predicted label 222 generated by the target model 150 for each of the augmented training samples 112A to generate the pseudo label 116P for the input label training sample 112G. That is, in some implementations, the pseudo label generator 210, for a given labeled training sample 112G, generates a plurality of augmented training samples 112A, generates a predicted label 222 for each of the augmented training samples 112A, and averages the predicted labels 222 for each generated augmented training sample 112A to generate the pseudo label 116P for the corresponding labeled training sample 112G.

Referring back to FIG. 1, the model trainer 110 also includes a weight estimator 130. The weight estimator 130, for each training sample 112G in the set of training samples 112G during each training iteration estimates a weight 132 of the training sample 112G. The weight 132 of the training sample 112G indicates an accuracy of the given label 116G of the labeled training sample 112G. For example, a higher weight indicates a greater probability of an accurate given label 116G. Thus, the weight estimator 130 determines a likelihood that a labeled training sample 112G is mislabeled.

In some examples, the weight estimator 130 determines the weight 132 based on predictions made by the target model 150 from labeled training samples 112G and trusted training samples 112T from a set of trusted training samples 112T. The model trainer 110 assumes trusted labels 116T of the trusted samples 112T are of high-quality and/or are clean. That is, the trusted labels 116T are accurate The model trainer 110 may treat the weight 132 as a learnable parameter by determining an optimal weight 132 for each labeled training samples 112G such that the trained target model 150 obtains the best performance on the set of trusted training samples 112T.

Because it may be computationally expensive to determine the weight 132 (as each update step requires training the target model 150 until convergence), optionally, the weight estimator 130 estimates the weight 132 by determining an online approximation of an optimal weight 132 of the labeled training sample 112G. The online approximation may include using stochastic gradient descent optimization. In some implementations, the optimal weight 132 minimizes a training loss of the target model 150. That is, the optimal weight 132 is a weight that results in the lowest training loss of the target model 150. The model trainer 110 may optimize the weight 132 based on back-propagation with second-order derivatives.

A sample partitioner 140 receives each training sample 112G and the associated weight 132 and the associated pseudo label 116P. The sample partitioner 140 includes a weight threshold 142. For each labeled training sample 112G, the sample partitioner 140 determines whether the weight 132 of labeled training sample 112G satisfies the weight threshold 142 For example, the sample partitioner 140 determines whether the weight 132 exceeds the weight threshold 142

When the weight 132 of the labeled training sample 112G satisfies the weight threshold 142, the sample partitioner 140 adds the training sample 112G to a set of cleanly labeled training samples 112C. The cleanly labeled training samples 112C include the training data 114 and clean labels 116C (i.e., given labels 116G determined clean by the sample partitioner 140). When the weight 132 of the labeled training sample 112G fails to satisfy the weight threshold 142, the sample partitioner 140 adds the labeled training sample 112G to a set of mislabeled training samples 112M. Thus, the likely mislabeled training samples 112G are isolated from the likely cleanly labeled training samples 112G to escalate supervision from mislabeled data.

When noise ratio is high (i.e., many of the labeled training samples 112G are noisy), the meta optimization-based reweighing and relabeling by the model trainer effectively prevents misleading optimization (i.e., most labeled training samples 112G will have zero or close to zero weights 132). However, the mislabeled training samples 112M may still provide valuable training data. Thus, to avoid potentially discarding a significant amount of data, the mislabeled training samples 112M include the training data 114 and, instead of the given label 116G, the associated pseudo label 116P. That is, for mislabeled training samples 112M, the pseudo label 116P is substituted for the given label 116G

In some examples, the model trainer 110 trains the target model 150 with the set of cleanly labeled training samples 112C using corresponding given labels 116G and the set of mislabeled training samples 112M using corresponding pseudo labels 116P. The target model 150 may be incrementally trained using any number of training iterations that repeat some or all of the steps described above.

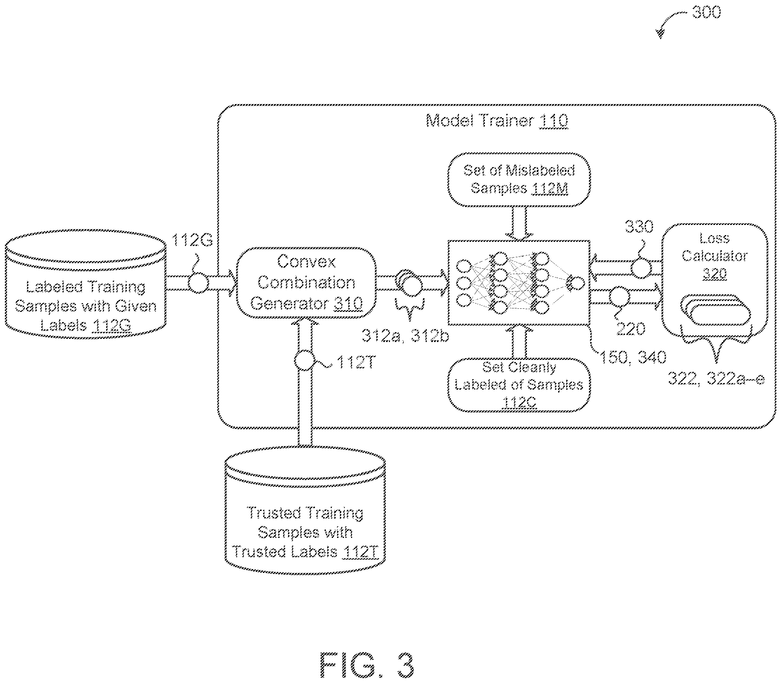

Referring now to FIG. 3, in some implementations, the model trainer 110 includes a convex combination generator 310. The convex combination generator 310 obtains the set of trusted training samples 112T that includes training data 114 and associated trusted labels 116T. The convex combination generator 310 generates convex combinations 312 for training the target model 150. In some examples, the convex combination generator 310 applies a pairwise MixUp to the set of trusted training samples 112T and the set of labeled training samples 112G The MixUp regularization allows the model trainer 110 to leverage the trusted information from the trusted training samples 112T without fear of overfilling. The MixUp regularization constructs extra supervision losses using the training samples 112G, 112T in the form of convex combinations and a MixUp factor.

In some examples, the model trainer 110 includes a loss calculator 320. The loss calculator 320 determines a first loss 322, 322a based on the cleanly labeled set of training samples 112C using corresponding given labels 116G. The loss calculator 320 may determine a second loss 322b based on the mislabeled set of training samples 112M using the corresponding pseudo labels 116P. The loss calculator 320 may determine a third loss 322c based on the convex combinations 310a of the set of trusted training samples 112T and a fourth loss 322d based on the convex combinations 310b of the set of labeled training samples 112G In some implementations, the loss calculator 320 determines a fifth loss 322e based on a Kullback-Leibler (KL) divergence between the given labels 116G of the set of labeled training samples 112G and the pseudo labels 116P of the set of labeled training samples 112G. The KL-divergence loss 322e sharpens the generation of pseudo labels 116P by reducing controversy of the augmented training samples 112A. This is because ideal pseudo labels 116P should be as close to accurate labels as possible. When the predictions for the augmented training samples 112A are controversial to each other (e.g, small changes in the training data 114 lead to large changes in the prediction), the contribution from the pseudo label 116P does not encourage the target model 150 to be discriminative. Thus, the KL-divergence loss 322e helps enforce consistency of the pseudo labels 116P.

The loss calculator 320 may determine a total loss 330 based on one or more of the first loss 322a, the second loss 322b, the third loss 322c, the fourth loss 322d, and the fifth loss 322e. In some examples, one or more of the losses 322a-e (i.e., the third loss 322c and the fourth loss 322d) are softmax cross-entropy losses. Based on the total loss 330, the loss calculator 320 updates model parameters 340 of the target model 150. The loss calculator may apply a one-step stochastic gradient based on the total loss 330 to determine the updated model parameters 340.

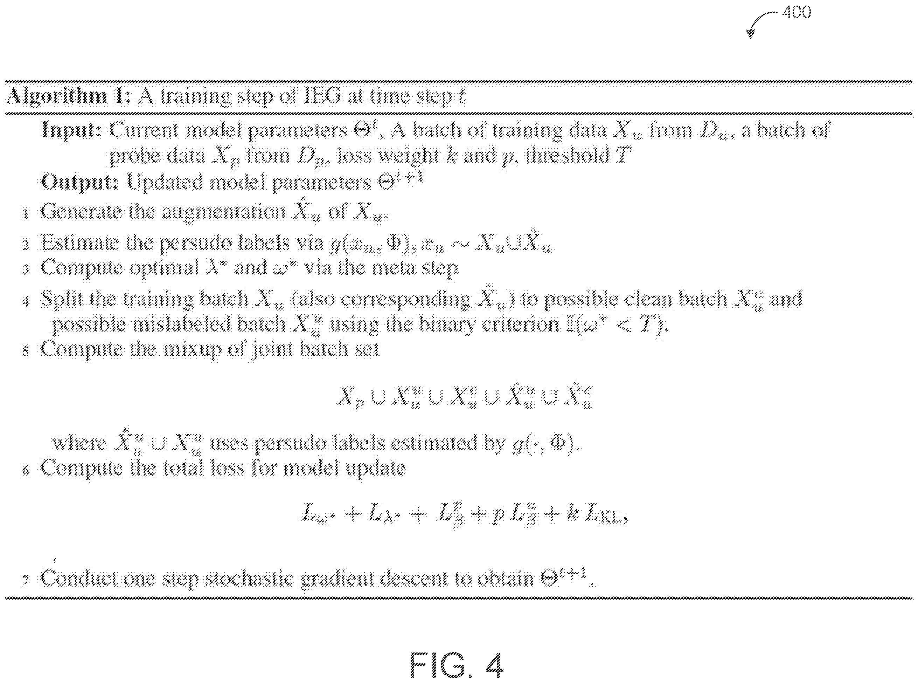

Referring now to FIG. 4, in some implementations, the model trainer 110 implements an algorithm 400 to train the target model 150. Here, the model trainer accepts as input the labeled training samples 112G (i.e., *Dᵤ*) and the trusted training samples 112T (i.e., *Dₚ*). The model trainer 110, for each training iteration (i.e., time step t), updates the model parameters 340 of the target model 150 Using the algorithm 400, the model trainer 110 trains the target model 150 by generating the augmented training samples 112A at step 1 and estimating or generating the pseudo labels 116P at step 2. At step 3, the model trainer 110 determines the optimal weight 132 and/or updates the weight estimator 130 (ie., λ). At step 4, the model trainer 110 splits the set of labeled training samples 112G into the set of cleanly labeled training samples 112C and the set of mislabeled training samples 112M. At step 5, the model trainer computes the MixUp convex combinations 312. At step 6, the model trainer 110 determines the total loss 330 and at step 6, conducts a one-step stochastic gradient to obtain updated model parameters 340 for the next training iteration In some examples, the model trainer 110 determines an exact momentum update using a momentum value during the one-step stochastic gradient optimization

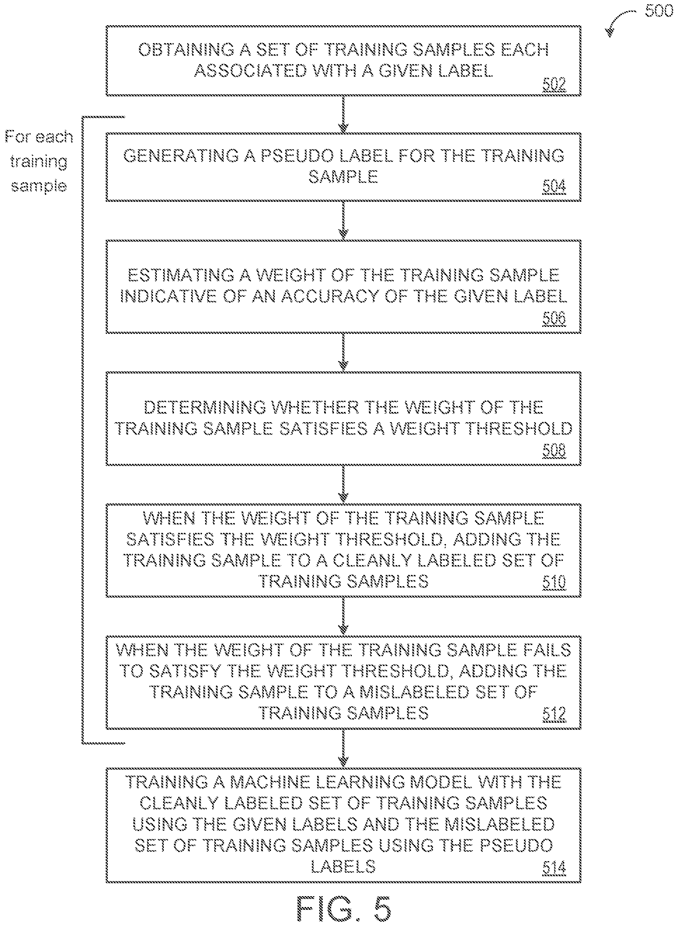

FIG. 5 is a flowchart of an exemplary arrangement of operations for a method 500 for robust training in the presence of label noise. The method 500, at operation 502, includes obtaining, at data processing hardware 12, a set of labeled training samples 112G. Each labeled training sample 112G is associated with a given label 116G. At operation 504, during each of a plurality of training iterations, the method 500 includes, for each labeled training sample 112G in the set of labeled training samples 112G, generating, by the data processing hardware 12, a pseudo label 116P for the labeled training sample 112G. At operation 506, the method 500 includes, estimating, by the data processing hardware 12, a weight 132 of the labeled training sample 112G indicative of an accuracy of the given label 116G.

The method 500 includes, at operation 508, determining, by the data processing hardware 12, whether the weight 132 of the labeled training sample 112G satisfies a weight threshold 142 When the weight 132 of the labeled training sample 111G satisfies the weight threshold 142, the method 500 includes, at operation 510, adding, by the data processing hardware 12, the labeled training sample 112G to a set of cleanly labeled training samples 112C. At operation 512, the method 500 includes, when the weight 132 of the labeled training sample 112G fails to satisfy the weight threshold 142, adding, by the data processing hardware 12, the labeled training sample 112G to a set of mislabeled training samples 112M. At operation 514, the method 500 includes training, by the data processing hardware 12, a machine learning model 150 with the set of cleanly labeled training samples 112C using corresponding given labels 116G and the set of mislabeled training samples 112M using corresponding pseudo labels 116P

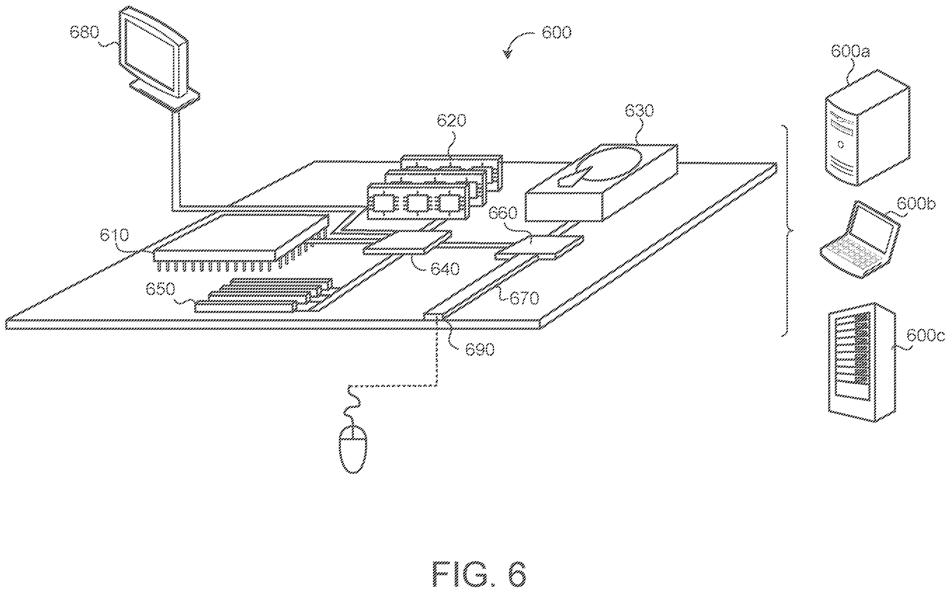

FIG. 6 is schematic view of an example computing device 600 that may be used to implement the systems and methods described in this document. The computing device 600 is intended to represent various forms of digital computers, such as laptops, desktops, workstations, personal digital assistants, servers, blade servers, mainframes, and other appropriate computers. The components shown here, their connections and relationships, and their functions, are meant to be exemplary only, and are not meant to limit implementations of the inventions described and/or claimed in this document

The computing device 600 includes a processor 610, memory 620, a storage device 630, a high-speed interface/controller 640 connecting to the memory 620 and high-speed expansion ports 650, and a low speed interface/controller 660 connecting to a low speed bus 670 and a storage device 630. Each of the components 610, 620, 630, 640, 650, and 660, are interconnected using various busses, and may be mounted on a common motherboard or in other manners as appropriate. The processor 610 can process instructions for execution within the computing device 600, including instructions stored in the memory 620 or on the storage device 630 to display graphical information for a graphical user interface (GUI) on an external input/output device, such as display 680 coupled to high speed interface 640. In other implementations, multiple processors and/or multiple buses may be used, as appropriate, along with multiple memories and types of memory. Also, multiple computing devices 600 may be connected, with each device providing portions of the necessary operations (e g., as a server bank, a group of blade servers, or a multi-processor system).

The memory 620 stores information non-transitorily within the computing device 600. The memory 620 may be a computer-readable medium, a volatile memory unit(s), or non-volatile memory unit(s). The non-transitory memory 620 may be physical devices used to store programs (e.g., sequences of instructions) or data (e.g., program state information) on a temporary or permanent basis for use by the computing device 600. Examples of non-volatile memory include, but are not limited to, flash memory and read-only memory (ROM) / programmable read-only memory (PROM) / erasable programmable read-only memory (EPROM) % electronically erasable programmable read-only memory (EEPROM) (e.g., typically used for firmware, such as boot programs) Examples of volatile memory include, but are not limited to, random access memory (RAM), dynamic random access memory (DRAM), static random access memory (SRAM), phase change memory (PCM) as well as disks or tapes

The storage device 630 is capable of providing mass storage for the computing device 600. In some implementations, the storage device 630 is a computer-readable medium. In various different implementations, the storage device 630 may be a floppy disk device, a hard disk device, an optical disk device, or a tape device, a flash memory or other similar solid state memory device, or an array of devices, including devices in a storage area network or other configurations. In additional implementations, a computer program product is tangibly embodied in an information carrier. The computer program product contains instructions that, when executed, perform one or more methods, such as those described above. The information carrier is a computer- or machine-readable medium, such as the memory 620, the storage device 630, or memory on processor 610.

The high speed controller 640 manages bandwidth-intensive operations for the computing device 600, while the low speed controller 660 manages lower bandwidth-intensive operations Such allocation of duties is exemplary only In some implementations, the high-speed controller 640 is coupled to the memory 620, the display 680 (e.g., through a graphics processor or accelerator), and to the high-speed expansion ports 650, which may accept various expansion cards (not shown). In some implementations, the low-speed controller 660 is coupled to the storage device 630 and a low-speed expansion port 690. The low-speed expansion port 690, which may include various communication ports (e.g., USB, Bluetooth, Ethernet, wireless Ethernet), may be coupled to one or more input/output devices, such as a keyboard, a pointing device, a scanner, or a networking device such as a switch or router, e.g., through a network adapter.

The computing device 600 may be implemented in a number of different forms, as shown in the figure. For example, it may be implemented as a standard server 600a or multiple times in a group of such servers 600a, as a laptop computer 600b, or as part of a rack server system 600c.

Various implementations of the systems and techniques described herein can be realized in digital electronic and/or optical circuitry, integrated circuitry, specially designed ASICs (application specific integrated circuits), computer hardware, firmware, software, and/or combinations thereof These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

A software application (i.e., a software resource) may refer to computer software that causes a computing device to perform a task. In some examples, a software application may be referred to as an "application," an "app," or a "program." Example applications include, but are not limited to, system diagnostic applications, system management applications, system maintenance applications, word processing applications, spreadsheet applications, messaging applications, media streaming applications, social networking applications, and gaming applications.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, non-transitory computer readable medium, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

The processes and logic flows described in this specification can be performed by one or more programmable processors, also referred to as data processing hardware, executing one or more computer programs to perform functions by operating on input data and generating output. The processes and logic flows can also be performed by special purpose logic circuitry, e.g., an FPGA (field programmable gate array) or an ASIC (application specific integrated circuit) Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

To provide for interaction with a user, one or more aspects of the disclosure can be implemented on a computer having a display device, e.g., a CRT (cathode ray tube), LCD (liquid crystal display) monitor, or touch screen for displaying information to the user and optionally a keyboard and a pointing device, e.g., a mouse or a trackball, by which the user can provide input to the computer. Other kinds of devices can be used to provide interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user, for example, by sending web pages to a web browser on a user's client device in response to requests received from the web browser

A number of implementations have been described Nevertheless, other implementations are within the scope of the following claims.

## Claims

1. A method (500) for training a machine learning model (150), the method (500) comprising:
obtaining, at data processing hardware (12), a set of labeled training samples (112G), each labeled training sample (112G) associated with a given label (116G); and
during each of a plurality of training iterations:
for each labeled training sample (112G) in the set of labeled training samples (112G):
generating, by the data processing hardware (12), a pseudo label (116P) for the labeled training sample (112G), by:
generating a plurality of augmented training samples (112A) based on the labeled training sample (112G);
for each augmented training sample (112A), generating, using the machine learning model (150), a predicted label (222); and
averaging each predicted label (222) generated for each augmented training sample (112A) of the plurality of augmented training samples (112A) to generate the pseudo label (116P) for the corresponding labeled training sample (112G);
estimating, by the data processing hardware (12), a weight (132) of the labeled training sample (112G) indicative of an accuracy of the given label (116G);
determining, by the data processing hardware (12), whether the weight (132) of the labeled training sample (112G) satisfies a weight threshold (142);
when the weight (132) of the labeled training sample (112G) satisfies the weight threshold (142), adding, by the data processing hardware (12), the labeled training sample (112G) to a set of cleanly labeled training samples (112C); and
when the weight (132) of the labeled training sample (112G) fails to satisfy the weight threshold (142), adding, by the data processing hardware (12), the labeled training sample (112G) to a set of mislabeled training samples (112M); and
training, by the data processing hardware (12), the machine learning model (150) with the set of cleanly labeled training samples (112C) using corresponding given labels (116G) and the set of mislabeled training samples (112M) using corresponding pseudo labels (116P).

2. The method (500) of claim 1, wherein estimating the weight (132) of the labeled training sample (112G) comprises determining an online approximation of an optimal weight (132) of the labeled training sample (112G); and
wherein optionally determining the online approximation of the optimal weight (132) of the labeled training sample (112G) comprises using stochastic gradient descent optimization.

3. The method (500) of claim 2, wherein the optimal weight (132) minimizes a training loss (322) of the machine learning model (150).

4. The method (500) of any of claims 1-3, wherein training the machine learning model (150) comprises:
obtaining a set of trusted training samples (112T), each trusted training sample (112T) associated with a trusted label (116T); and
generating convex combinations (312) using the set of trusted training samples (112T) and the set of labeled training samples (112G).

5. The method (500) of claim 4, wherein generating the convex combinations (312) comprises applying a pairwise MixUp to the set of trusted training samples (112T) and the set of labeled training samples (112G).

6. The method (500) of claims 4 or 5, wherein training the machine learning model (150) further comprises:
determining a first loss (322a) based on the set of cleanly labeled training samples (112C) using corresponding given labels (116G);
determining a second loss (322b) based on the set of mislabeled training samples (112M) using corresponding pseudo labels (116P);
determining a third loss (322c) based on the convex combinations (312) of the set of trusted training samples (112T);
determining a fourth loss (322d) based on the convex combinations (312) of the set of labeled training samples (112G);
determining a fifth loss (322e) based on a Kullback-Leibler divergence between the given labels (116G) of the set of labeled training samples (112G) and the pseudo labels (116P) of the set of labeled training samples (112G); and
determining a total loss (330) based on the first loss (322a), the second loss (322b), the third loss (322c), the fourth loss (322d), and the fifth loss (322e).

7. The method (500) of claim 6, wherein the third loss (322c) and the fourth loss (322d) are softmax cross-entropy losses.

8. The method (500) of any of claims 1-7, wherein each labeled training sample (112G) of the set of labeled training samples (112G) are images and the given labels (116G) are text descriptors of the images.

9. A system (100) for training a machine learning model (150) comprising:
data processing hardware (12); and
memory hardware (14) in communication with the data processing hardware (12), the memory hardware (14) storing instructions that when executed on the data processing hardware (12) cause the data processing hardware (12) to perform operations comprising:
obtaining a set of labeled training samples (112G), each labeled training sample (112G) associated with a given label (116G); and
during each of a plurality of training iterations:
for each labeled training sample (112G) in the set of labeled training samples (112G):
generating a pseudo label (116P) for the labeled training sample (112G), by:
generating a plurality of augmented training samples (112A) based on the labeled training sample (112G);
for each augmented training sample (112A), generating, using the machine learning model (150), a predicted label (222); and
averaging each predicted label (222) generated for each augmented training sample (112A) of the plurality of augmented training samples (112A) to generate the pseudo label (116P) for the corresponding labeled training sample (112G);
estimating a weight (132) of the labeled training sample (112G) indicative of an accuracy of the given label (116G);
determining whether the weight (132) of the labeled training sample (112G) satisfies a weight threshold (142);
when the weight (132) of the labeled training sample (112G) satisfies the weight threshold (142), adding the labeled training sample (112G) to a set of cleanly labeled training samples (112C); and
when the weight (132) of the labeled training sample (112G) fails to satisfy the weight threshold (142), adding the labeled training sample (112G) to a set of mislabeled training samples (112M); and
training a machine learning model (150) with the set of cleanly labeled training samples (112C) using corresponding given labels (116G) and the set of mislabeled training samples (112M) using corresponding pseudo labels (116P).

10. The system (100) of claim 9, wherein estimating the weight (132) of the labeled training sample (112G) comprises determining an online approximation of an optimal weight (132) of the labeled training sample (112G); and
wherein optionally determining the online approximation of the optimal weight (132) of the labeled training sample (112G) comprises using stochastic gradient descent optimization; and/or
wherein optionally the optimal weight (132) minimizes a training loss (322) of the machine learning model (150).

11. The system (100) of claim 9 or 10, wherein training the machine learning model (150) comprises:
obtaining a set of trusted training samples (112T), each trusted training sample (112T) associated with a trusted label (116T); and
generating convex combinations (312) using the set of trusted training samples (112T) and the set of labeled training samples (112G).

12. The system (100) of claim 11, wherein generating the convex combinations (312) comprises applying a pairwise MixUp to the set of trusted training samples (112T) and the set of labeled training samples (112G).

13. The system (100) of claims 11 or 12, wherein training the machine learning model (150) further comprises:
determining a first loss (322a) based on the set of cleanly labeled training samples (112C) using corresponding given labels (116G);
determining a second loss (322b) based on the set of mislabeled training samples (112M) using corresponding pseudo labels (116P);
determining a third loss (322c) based on the convex combinations (312) of the set of trusted training samples (112T);
determining a fourth loss (322d) based on the convex combinations (312) of the set of labeled training samples (112G);
determining a fifth loss (322e) based on a Kullback-Leibler divergence between the given labels (116G) of the set of labeled training samples (112G) and the pseudo labels (116P) of the set of labeled training samples (1 12G); and
determining a total loss (330) based on the first loss (322a), the second loss (322b), the third loss (322c), the fourth loss (322d), and the fifth loss (322e).

14. The system (100) of claim 13, wherein the third loss (322c) and the fourth loss (322d) are softmax cross-entropy losses.

15. The system (100) of any of claims 9-14, wherein each labeled training sample (112G) of the set of labeled training samples (112G) are images and the given labels (116G) are text descriptors of the images.

## Patentansprüche

1. Verfahren (500) zum Trainieren eines Maschinenlernmodells (150), wobei das Verfahren (500) Folgendes umfasst:
Erlangen eines Satzes von etikettierten Trainingsproben (112G) an der Datenverarbeitungshardware (12), wobei jede etikettierte Trainingsprobe (112G) einem gegebenen Etikett (116G) zugeordnet ist; und
während jeder einer Vielzahl von Trainingsiterationen:
für jede etikettierte Trainingsprobe (112G) in dem Satz von etikettierten Trainingsproben (112G):
Erzeugen eines Pseudo-Etiketts (116P) für die etikettierte Trainingsprobe (112G) durch die Datenverarbeitungshardware (12), durch:
Erzeugen einer Vielzahl von erweiterten Trainingsproben (112A) basierend auf der etikettierten Trainingsprobe (112G);
für jede erweiterte Trainingsprobe (112A), Erzeugen eines vorhergesagten Etiketts (222) unter Verwendung des Maschinenlernmodells (150); und
Mittelwertbilden jedes vorhergesagten Etiketts (222), das bei jeder erweiterten Trainingsprobe (112A) der Vielzahl von erweiterten Trainingsproben (112A) erzeugt wird, um das Pseudo-Etikett (116P) für die entsprechende etikettierte Trainingsprobe (112G) zu erzeugen;
Schätzen einer Gewichtung (132) der etikettierten Trainingsprobe (112G), die eine Angabe über die Genauigkeit des gegebenen Etiketts (116G) angibt, durch die Datenverarbeitungshardware (12);
Bestimmen, ob die Gewichtung (132) der etikettierten Trainingsprobe (112G) einen Gewichtungsschwellenwert (142) erfüllt, durch die Datenverarbeitungshardware (12);
wenn der Gewichtungsschwellenwert (132) der etikettierten Trainingsprobe (112G) den Gewichtungsschwellenwert (142) erfüllt, Hinzufügen der etikettierten Trainingsprobe (112G) zu einem Satz von sauber etikettierten Trainingsproben (112C) durch die Datenverarbeitungshardware (12); und
wenn der Gewichtungsschwellenwert (132) der etikettierten Trainingsprobe (112G) den Gewichtungsschwellenwert (142) nicht erfüllt, Hinzufügen der etikettierten Trainingsprobe (112G) zu einem Satz von falsch etikettierten Trainingsproben (112M) durch die Datenverarbeitungshardware (12); und
Trainieren des Maschinenlernmodells (150) mit dem Satz von sauber etikettierten Trainingsproben (112C) unter Verwendung entsprechender gegebener Etiketten (116G) und dem Satz von falsch etikettierten Trainingsproben (112M) unter Verwendung entsprechender Pseudo-Etiketten (116P) durch die Datenverarbeitungshardware (12).

2. Verfahren (500) nach Anspruch 1, wobei das Schätzen der Gewichtung (132) der etikettierten Trainingsprobe (112G) das Bestimmen einer Online-Annäherung an eine optimale Gewichtung (132) der etikettierten Trainingsprobe (112G) umfasst; und
wobei optional das Bestimmen der Online-Annäherung an die optimale Gewichtung (132) der etikettierten Trainingsprobe (112G) das Verwenden einer stochastischen Gradienten-Abstiegsoptimierung umfasst.

3. Verfahren (500) nach Anspruch 2, wobei die optimale Gewichtung (132) einen Trainingsverlust (322) des Maschinenlemmodells (150) minimiert.

4. Verfahren (500) nach einem der Ansprüche 1-3, wobei das Trainieren des Maschinenlernmodells (150) Folgendes umfasst:
Erlangen eines Satzes von vertrauenswürdigen Trainingsproben (112T), wobei jede vertrauenswürdige Trainingsprobe (112T) einem vertrauenswürdigen Etikett (116T) zugeordnet ist; und
Erzeugen von konvexen Kombinationen (312) unter Verwendung des Satzes von vertrauenswürdigen Trainingsproben (112T) und des Satzes von etikettierten Trainingsproben (112G).

5. Verfahren (500) nach Anspruch 4, wobei das Erzeugen der konvexen Kombinationen (312) Anwenden eines paarweisen MixUp auf den Satz von vertrauenswürdigen Trainingsproben (112T) und den Satz von etikettierten Trainingsproben (112G) umfasst.

6. Verfahren (500) nach Anspruch 4 oder 5, wobei das Trainieren des Maschinenlernmodells (150) ferner Folgendes umfasst:
Bestimmen eines ersten Verlusts (322a) basierend auf dem Satz von sauber etikettierten Trainingsproben (112C) unter Verwendung entsprechender gegebener Etiketten (116G);
Bestimmen eines zweiten Verlusts (322b) basierend auf dem Satz von falsch etikettierten Trainingsproben (112M) unter Verwendung entsprechender Pseudo-Etiketten (116P);
Bestimmen eines dritten Verlustes (322c) basierend auf den konvexen Kombinationen (312) des Satzes von vertrauenswürdigen Trainingsproben (112T);
Bestimmen eines vierten Verlusts (322d) basierend auf den konvexen Kombinationen (312) des Satzes von etikettierten Trainingsproben (112G);
Bestimmen eines fünften Verlusts (322e) basierend auf einer Kullback-Leibler-Divergenz zwischen den gegebenen Etiketten (116G) des Satzes von etikettierten Trainingsproben (112G) und den Pseudo-Etiketten (116P) des Satzes von etikettierten Trainingsproben (112G); und
Bestimmen eines Gesamtverlustes (330) basierend auf dem ersten Verlust (322a), dem zweiten Verlust (322b), dem dritten Verlust (322c), dem vierten Verlust (322d) und dem fünften Verlust (322e).

7. Verfahren (500) nach Anspruch 6, wobei der dritte Verlust (322c) und der vierte Verlust (322d) Softmax-Kreuzentropieverluste sind.

8. Verfahren (500) nach einem der Ansprüche 1-7, wobei jede etikettierte Trainingsprobe (112G) des Satzes von etikettierten Trainingsproben (112G) Bilder sind und die gegebenen Etiketten (116G) Textdeskriptoren der Bilder sind.

9. System (100) zum Trainieren eines Maschinenlernmodells (150), umfassend:
Datenverarbeitungshardware (12); und
Speicherhardware (14), die mit der Datenverarbeitungshardware (12) kommuniziert, wobei die Speicherhardware (14) Anweisungen speichert, die bei Ausführung auf der Datenverarbeitungshardware (12) die Datenverarbeitungshardware (12) veranlassen, Operationen durchzuführen, die Folgendes umfassen:
Erlangen eines Satzes von etikettiert Trainingsproben (112G), wobei jede etikettierte Trainingsprobe (112G) einem gegebenen Etikett (116G) zugeordnet ist; und
während jeder einer Vielzahl von Trainingsiterationen:
für jede etikettierte Trainingsprobe (112G) in dem Satz von etikettierten Trainingsproben (112G):
Erzeugen eines Pseudo-Etiketts (116P) für die etikettierte Trainingsprobe (112G), durch:
Erzeugen einer Vielzahl von erweiterten Trainingsproben (112A) basierend auf der etikettierten Trainingsprobe (112G);
für jede erweiterte Trainingsprobe (112A), Erzeugen eines vorhergesagten Etiketts (222) unter Verwendung des Maschinenlernmodells (150); und
Mittelwertbilden jedes vorhergesagten Etiketts (222), das bei jeder erweiterten Trainingsprobe (112A) der Vielzahl von erweiterten Trainingsproben (112A) erzeugt wird, um das Pseudo-Etikett(116P) für die entsprechende etikettierte Trainingsprobe (112G) zu erzeugen;
Schätzen einer Gewichtung (132) der etikettierten Trainingsprobe (112G), die eine Angabe über die Genauigkeit des gegebenen Etiketts (116G) angibt;
Bestimmen, ob die Gewichtung (132) der etikettierten Trainingsprobe (112G) einen Gewichtungsschwellenwert (142) erfüllt;
wenn der Gewichtungsschwellenwert (132) der etikettierten Trainingsprobe (112G) den Gewichtungsschwellenwert (142) erfüllt, Hinzufügen der etikettierten Trainingsprobe (112G) zu einem Satz von sauber etikettierten Trainingsproben (112C); und
wenn der Gewichtungsschwellenwert (132) der etikettierten Trainingsprobe (112G) den Gewichtungsschwellenwert (142) nicht erfüllt, Hinzufügen der etikettierten Trainingsprobe (112G) zu einem Satz von falsch etikettierten Trainingsproben (112M); und
Trainieren eines Maschinenlernmodells (150) mit dem Satz von sauber etikettierten Trainingsproben (112C) unter Verwendung entsprechender gegebener Etiketten (116G) und dem Satz von falsch etikettierten Trainingsproben (112M) unter Verwendung entsprechender Pseudo-Etiketten (116P).

10. System (100) nach Anspruch 9, wobei das Schätzen der Gewichtung (132) der etikettierten Trainingsprobe (112G) das Bestimmen einer Online-Annäherung an eine optimale Gewichtung (132) der etikettierten Trainingsprobe (112G) umfasst; und
wobei optional das Bestimmen der Online-Annäherung an die optimale Gewichtung (132) der etikettierten Trainingsprobe (112G) das Verwenden einer stochastischen Gradienten-Abstiegsoptimierung umfasst; und/oder
wobei optional die optimale Gewichtung (132) einen Trainingsverlust (322) des Maschinenlernmodells (150) minimiert.

11. System (100) nach Anspruch 9 oder 10, wobei das Trainieren des Maschinenlernmodells (150) Folgendes umfasst:
Erlangen eines Satzes von vertrauenswürdigen Trainingsproben (112T), wobei jede vertrauenswürdige Trainingsprobe (112T) einem vertrauenswürdigen Etikett (116T) zugeordnet ist; und
Erzeugen von konvexen Kombinationen (312) unter Verwendung des Satzes von vertrauenswürdigen Trainingsproben (112T) und des Satzes von etikettierten Trainingsproben (112G).

12. System (100) nach Anspruch 11, wobei das Erzeugen der konvexen Kombinationen (312) Anwenden eines paarweisen MixUp auf den Satz von vertrauenswürdigen Trainingsproben (112T) und den Satz von etikettierten Trainingsproben (112G) umfasst.

13. System (100) nach Anspruch 11 oder 12, wobei das Trainieren des Maschinenlernmodells (150) ferner Folgendes umfasst:
Bestimmen eines ersten Verlusts (322a) basierend auf dem Satz von sauber etikettierten Trainingsproben (112C) unter Verwendung entsprechender gegebener Etiketten (116G);
Bestimmen eines zweiten Verlusts (322b) basierend auf dem Satz von falsch etikettierten Trainingsproben (112M) unter Verwendung entsprechender Pseudo-Etiketten (116P);
Bestimmen eines dritten Verlustes (322c) basierend auf den konvexen Kombinationen (312) des Satzes von vertrauenswürdigen Trainingsproben (112T);
Bestimmen eines vierten Verlusts (322d) basierend auf den konvexen Kombinationen (312) des Satzes von etikettierten Trainingsproben (112G);
Bestimmen eines fünften Verlusts (322e) basierend auf einer Kullback-Leibler-Divergenz zwischen den gegebenen Etiketten (116G) des Satzes von etikettierten Trainingsproben (112G) und den Pseudo-Etiketten (116P) des Satzes von etikettierten Trainingsproben (112G); und
Bestimmen eines Gesamtverlustes (330) basierend auf dem ersten Verlust (322a), dem zweiten Verlust (322b), dem dritten Verlust (322c), dem vierten Verlust (322d) und dem fünften Verlust (322e).

14. System (100) nach Anspruch 13, wobei der dritte Verlust (322c) und der vierte Verlust (322d) Softmax-Kreuzentropieverluste sind.

15. System (100) nach einem der Ansprüche 9-14, wobei jede etikettierte Trainingsprobe (112G) des Satzes von etikettierten Trainingsproben (112G) Bilder sind und die gegebenen Etiketten (116G) Textdeskriptoren der Bilder sind.

## Revendications

1. Procédé (500) pour entraîner un modèle d'apprentissage automatique (150), le procédé (500) comprenant :
l'obtention, au niveau du matériel (12) de traitement de données, d'un ensemble d'échantillons d'entraînement étiquetés (112G), chaque échantillon d'entraînement étiqueté (112G) étant associé à une étiquette donnée (116G) ; et
pendant chacune d'une pluralité d'itérations d'entraînement :
pour chaque échantillon d'entraînement étiqueté (112G) dans l'ensemble d'échantillons d'entraînement étiquetés (112G) :
la génération, par le matériel de traitement de données (12), d'une pseudo-étiquette (116P) pour l'échantillon d'entraînement étiqueté (112G), en :
générant une pluralité d'échantillons d'entraînement augmentés (112A) sur la base de l'échantillon d'entraînement étiqueté (112G) ;
pour chaque échantillon d'entraînement augmenté (112A), générant, à l'aide du modèle d'apprentissage automatique (150), une étiquette prédite (222) ; et
faisant la moyenne de chaque étiquette prédite (222) générée pour chaque échantillon d'entraînement augmenté (112A) de la pluralité d'échantillons d'entraînement augmentés (112A) pour générer la pseudo-étiquette (116P) pour l'échantillon d'entraînement étiqueté correspondant (112G) ;
l'estimation, par le matériel de traitement de données (12), d'un poids (132) de l'échantillon d'entraînement étiqueté (112G) indicatif d'une précision de l'étiquette donnée (116G) ;
la détermination, par le matériel de traitement de données (12), quant à savoir si le poids (132) de l'échantillon d'entraînement étiqueté (112G) satisfait à un seuil de poids (142) ;
lorsque le poids (132) de l'échantillon d'entraînement étiqueté (112G) satisfait au seuil de poids (142), l'ajout, par le matériel de traitement de données (12), de l'échantillon d'entraînement étiqueté (112G) à un ensemble d'échantillons (112C) d'apprentissage proprement étiquetés ; et
lorsque le poids (132) de l'échantillon d'entraînement étiqueté (112G) ne satisfait pas au seuil de poids (142), l'ajout, par le matériel de traitement de données (12), de l'échantillon d'entraînement étiqueté (112G) à un ensemble d'échantillons d'entraînement (112M) mal étiquetés ; et
l'entraînement, par le matériel de traitement de données (12), du modèle d'apprentissage automatique (150) avec l'ensemble d'échantillons d'entraînement (112C) proprement étiquetés en utilisant des étiquettes données (116G) correspondantes et l'ensemble d'échantillons d'entraînement (112M) mal étiquetés en utilisant des pseudo-étiquettes (116P) correspondantes.

2. Procédé (500) selon la revendication 1, dans lequel l'estimation du poids (132) de l'échantillon d'entraînement étiqueté (112G) comprend la détermination d'une approximation en ligne d'un poids optimal (132) de l'échantillon d'entraînement étiqueté (112G) ; et
dans lequel éventuellement la détermination de l'approximation en ligne du poids optimal (132) de l'échantillon d'entraînement étiqueté (112G) comprend l'utilisation d'une optimisation par descente de gradient stochastique.

3. Procédé (500) selon la revendication 2, dans lequel le poids optimal (132) minimise une perte d'entraînement (322) du modèle d'apprentissage automatique (150).

4. Procédé (500) selon l'une quelconque des revendications 1 à 3, dans lequel l'entraînement du modèle d'apprentissage automatique (150) comprend :
l'obtention d'un ensemble d'échantillons d'entraînement fiables (112T), chaque échantillon d'entraînement fiable (112T) étant associé à une étiquette fiable (116T) ; et
la génération de combinaisons convexes (312) en utilisant l'ensemble d'échantillons d'entraînement fiables (112T) et l'ensemble d'échantillons d'entraînement étiquetés (112G).

5. Procédé (500) selon la revendication 4, dans lequel la génération des combinaisons convexes (312) comprend l'application d'un MixUp par paires à l'ensemble d'échantillons d'entraînement fiables (112T) et à l'ensemble d'échantillons d'entraînement étiquetés (112G).

6. Procédé (500) selon les revendications 4 ou 5, dans lequel l'entraînement du modèle d'apprentissage automatique (150) comprend également :
la détermination d'une première perte (322a) sur la base de l'ensemble d'échantillons d'entraînement (112C) proprement étiquetés à l'aide d'étiquettes données (116G) correspondantes ;
la détermination d'une deuxième perte (322b) sur la base de l'ensemble d'échantillons d'entraînement (112M) mal étiquetés à l'aide de pseudo-étiquettes (116P) correspondantes ;
la détermination d'une troisième perte (322c) sur la base des combinaisons convexes (312) de l'ensemble d'échantillons d'entraînement fiables (112T) ;
la détermination d'une quatrième perte (322d) sur la base des combinaisons convexes (312) de l'ensemble d'échantillons d'entraînement étiquetés (112G) ;
la détermination d'une cinquième perte (322e) sur la base d'une divergence de Kullback-Leibler entre les étiquettes données (116G) de l'ensemble d'échantillons d'entraînement étiquetés (112G) et les pseudo-étiquettes (116P) de l'ensemble d'échantillons d'entraînement étiquetés (112G) ; et
la détermination d'une perte totale (330) sur la base de la première perte (322a), de la deuxième perte (322b), de la troisième perte (322c), de la quatrième perte (322d) et de la cinquième perte (322e).

7. Procédé (500) selon la revendication 6, dans lequel la troisième perte (322c) et la quatrième perte (322d) sont des pertes d'entropie croisée softmax.

8. Procédé (500) selon l'une quelconque des revendications 1 à 7, dans lequel chaque échantillon d'entraînement étiqueté (112G) de l'ensemble d'échantillons d'entraînement étiquetés (112G) sont des images et les étiquettes données (116G) sont des descripteurs de texte des images.

9. Système (100) pour entraîner un modèle d'apprentissage automatique (150) comprenant :
un matériel de traitement de données (12) ; et
un matériel de mémoire (14) en communication avec le matériel de traitement de données (12), le matériel de mémoire (14) stockant des instructions qui, lorsqu'elles sont exécutées par le matériel de traitement de données (12), amènent le matériel de traitement de données (12) à exécuter des opérations comprenant :
l'obtention d'un ensemble d'échantillons d'entraînement étiquetés (112G), chaque échantillon d'entraînement étiqueté (112G) étant associé à une étiquette donnée (116G) ; et
pendant chacune d'une pluralité d'itérations d'entraînement :
pour chaque échantillon d'entraînement étiqueté (112G) dans l'ensemble d'échantillons d'entraînement étiquetés (112G) :
la génération d'une pseudo-étiquette (116P) pour l'échantillon d'entraînement étiqueté (112G), en :
générant une pluralité d'échantillons d'entraînement augmentés (112A) sur la base de l'échantillon d'entraînement étiqueté (112G) ;
pour chaque échantillon d'entraînement augmenté (112A), générant, à l'aide du modèle d'apprentissage automatique (150), une étiquette prédite (222) ; et
faisant la moyenne de chaque étiquette prédite (222) générée pour chaque échantillon d'entraînement augmenté (112A) de la pluralité d'échantillons d'entraînement augmentés (112A) pour générer la pseudo-étiquette (116P) pour l'échantillon d'entraînement étiqueté correspondant (112G) ;
l'estimation d'un poids (132) de l'échantillon d'entraînement étiqueté (112G) indicatif d'une précision de l'étiquette donnée (116G) ;
la détermination quant à savoir si le poids (132) de l'échantillon d'entraînement étiqueté (112G) satisfait à un seuil de poids (142) ;
lorsque le poids (132) de l'échantillon d'entraînement étiqueté (112G) satisfait au seuil de poids (142), l'ajout de l'échantillon d'entraînement étiqueté (112G) à un ensemble d'échantillons (112C) d'apprentissage proprement étiquetés ; et
lorsque le poids (132) de l'échantillon d'entraînement étiqueté (112G) ne satisfait pas au seuil de poids (142), l'ajout de l'échantillon d'entraînement étiqueté (112G) à un ensemble d'échantillons d'entraînement (112M) mal étiquetés ; et
l'entraînement d'un modèle d'apprentissage automatique (150) avec l'ensemble d'échantillons d'entraînement (112C) proprement étiquetés en utilisant des étiquettes données (116G) correspondantes et l'ensemble d'échantillons d'entraînement (112M) mal étiquetés en utilisant des pseudo-étiquettes (116P) correspondantes.

10. Système (100) selon la revendication 9, dans lequel l'estimation du poids (132) de l'échantillon d'entraînement étiqueté (112G) comprend la détermination d'une approximation en ligne d'un poids optimal (132) de l'échantillon d'entraînement étiqueté (112G) ; et
dans lequel éventuellement la détermination de l'approximation en ligne du poids optimal (132) de l'échantillon d'entraînement étiqueté (112G) comprend l'utilisation d'une optimisation par descente de gradient stochastique ; et/ou
dans lequel éventuellement le poids optimal (132) minimise une perte d'entraînement (322) du modèle d'apprentissage automatique (150).

11. Système (100) selon la revendication 9 ou 10, dans lequel l'entraînement du modèle d'apprentissage automatique (150) comprend :
l'obtention d'un ensemble d'échantillons d'entraînement fiables (112T), chaque échantillon d'entraînement fiable (112T) étant associé à une étiquette fiable (116T) ; et
la génération de combinaisons convexes (312) en utilisant l'ensemble d'échantillons d'entraînement fiables (112T) et l'ensemble d'échantillons d'entraînement étiquetés (112G).

12. Système (100) selon la revendication 11, dans lequel la génération des combinaisons convexes (312) comprend l'application d'un MixUp par paires à l'ensemble d'échantillons d'entraînement fiables (112T) et à l'ensemble d'échantillons d'entraînement étiquetés (112G).

13. Système (100) selon les revendications 11 ou 12, dans lequel l'entraînement du modèle d'apprentissage automatique (150) comprend également :
la détermination d'une première perte (322a) sur la base de l'ensemble d'échantillons d'entraînement (112C) proprement étiquetés à l'aide d'étiquettes données (116G) correspondantes ;
la détermination d'une deuxième perte (322b) sur la base de l'ensemble d'échantillons d'entraînement (112M) mal étiquetés à l'aide de pseudo-étiquettes (116P) correspondantes ;
la détermination d'une troisième perte (322c) sur la base des combinaisons convexes (312) de l'ensemble d'échantillons d'entraînement fiables (112T) ;
la détermination d'une quatrième perte (322d) sur la base des combinaisons convexes (312) de l'ensemble d'échantillons d'entraînement étiquetés (112G) ;
la détermination d'une cinquième perte (322e) sur la base d'une divergence de Kullback-Leibler entre les étiquettes données (116G) de l'ensemble d'échantillons d'entraînement étiquetés (112G) et les pseudo-étiquettes (116P) de l'ensemble d'échantillons d'entraînement étiquetés (112G) ; et
la détermination d'une perte totale (330) sur la base de la première perte (322a), de la deuxième perte (322b), de la troisième perte (322c), de la quatrième perte (322d) et de la cinquième perte (322e).

14. Système (100) selon la revendication 13, dans lequel la troisième perte (322c) et la quatrième perte (322d) sont des pertes d'entropie croisée softmax.

15. Système (100) selon l'une quelconque des revendications 9 à 14, dans lequel chaque échantillon d'entraînement étiqueté (112G) de l'ensemble d'échantillons d'entraînement étiquetés (112G) sont des images et les étiquettes données (116G) sont des descripteurs de texte des images.
